# EUROPÄISCHE PATENTSCHRIFT

(11) **EP 0 382 042 B1**
(45) Veröffentlichungstag und Bekanntmachung des Hinweises auf die Patenterteilung: **28.07.1993**
(21) Anmeldenummer: 90101743.4
(22) Anmeldetag: 29.01.1990
(51) Int. Cl.: F16K 11/02

(54) **Mischventil für Sanitärarmaturen**
Mixing valve for sanitary fittings
Soupape de mélange pour armatures sanitaires

(30) Priorität: 10.02.1989 DE 3903997
(43) Veröffentlichungstag der Anmeldung: 16.08.1990
(73) Patentinhaber: FRIEDRICH GROHE AKTIENGESELLSCHAFT, D-58675 Hemer (DE)
(72) Erfinder: Pawelzik, Manfred, D-4770 Soest (DE); Titze, Horst, D-5800 Hagen (DE)

(56) Entgegenhaltungen:
- DE-A- 3 137 774
- DE-A- 3 202 040
- DE-A- 3 244 121
- DE-A- 3 510 835
- DE-A- 3 525 052
- DE-A- 3 716 305

## Beschreibung

Die Erfindung betrifft ein Mischventil für Sanitärarmaturen mit den im Oberbegriff des Anspruchs 1 angegebenen Merkmalen.
Ein derartiges Mischventil ist aus der Druckschrift DE-A-35 10 835 bekannt. Bei diesem vorbekannten Mischventil ist zur Anpassung an Sanitärarmaturen, die für Mischventilkartuschen mit größerem Außendurchmesser ausgelegt sind, vorgesehen, daß zur Ausgleichung an der Mantelhülse des Gehäuses der Ventilkartusche ein Paßring befestigbar ist. Beispielsweise aus Design- oder Kostengründen besteht vielfach das Bestreben, die in die Sanitärarmatur einzusetzende Mischventilkartusche mit möglichst kleinen Abmessungen aber gleichen Durchflußleistungen zu realisieren.

Der Erfindung liegt daher die Aufgabe zugrunde, ein Paßteil zu schaffen, mit dem auch in ihren Abmessungen wesentlich reduzierte Mischventilkartuschen in herkömmliche Armaturen eingesetzt werden können.

Diese Aufgabe wird erfindungsgemäß durch die im kennzeichnenden Teil des Anspruchs 1 angegebenen Merkmale gelöst.
Weitere Ausgestaltungen der Erfindung sind in den Ansprüchen 2 bis 5 angegeben.

Die mit der Erfindung erzielbaren Vorteile bestehen insbesondere darin, daß mit der relativ einfach, z.B. aus Kunststoff im Spritzgießverfahren, herstellbaren, napfförmigen Scheibe die kleinere Abmessungen aufweisende Mischventilkartusche in der herkömmlichen Sanitärarmatur an dem erforderlichen Platz anordbar ist, so daß auch der Betätigungsgriff die richtige Position zur Sanitärarmatur einnehmen kann. Außerdem können zur Sanitärarmatur gehörende Hauben am Mantelbereich der napfförmigen Scheibe z.B. mit Gewinde befestigt werden. Darüber hinaus ist sichergestellt, daß die Zu- und Abflußkanäle in der Sanitärarmatur exakt mit den Zu-und Abläufen in der Ventilsitzscheibe bei der Einmontage verbunden werden.

Ein Ausführungsbeispiel der Erfindung ist in der Zeichnung dargestellt und wird im folgenden näher erläutert. Es zeigt
- Figur 1: eine teilweise dargestellte Sanitärarmatur mit eingebauter Mischventilkartusche im Längsschnitt;
- Figur 2: die Mischventilkartusche gemäß Figur 1 in vergrößerter Darstellung im Längsschnitt;
- Figur 3: ein Bodenteil der Mischventilkartusche in Druntersicht;
- Figur 4: das Bodenteil gemäß Figur 3 im Seitenschnitt;

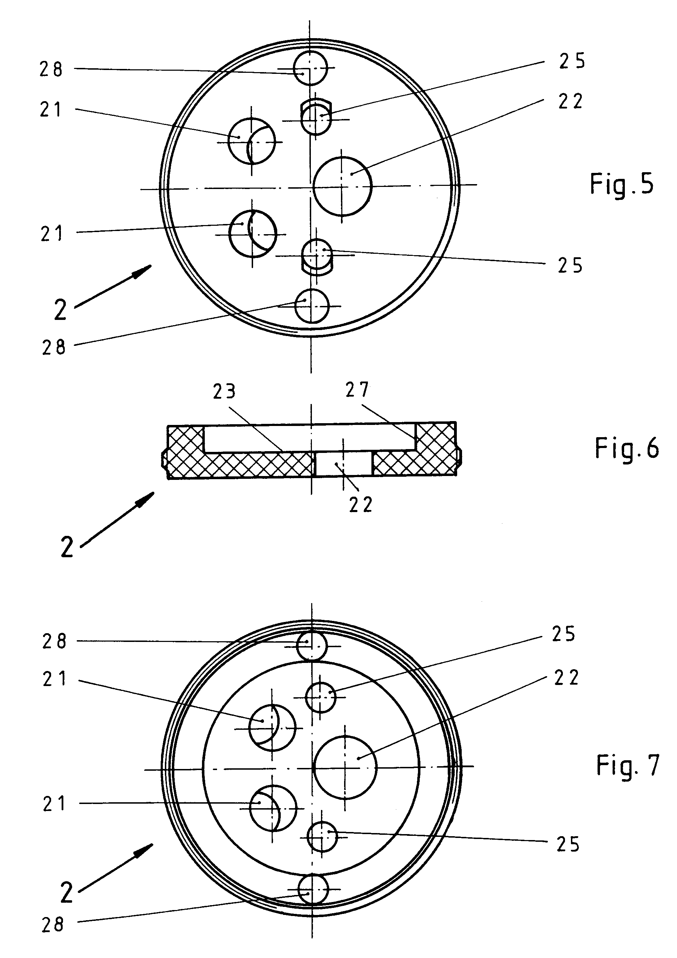

- Figur 5: die in Figur 1 gezeigte napfförmige Scheibe in Druntersicht;
- Figur 6: die napfförmige Scheibe gemäß Figur 5 im Seitenschnitt;
- Figur 7: die napfförmige Scheibe gemäß Figur 5 in Draufsicht;
- Figur 8: eine andere Ausbildung zur Fixierung und Verrastung der napfförmigen Scheibe in Druntersicht in vergrößerter Darstellung;
- Figur 9: die verrastbare Fixierung gemäß Figur 8 im Seitenschnitt.

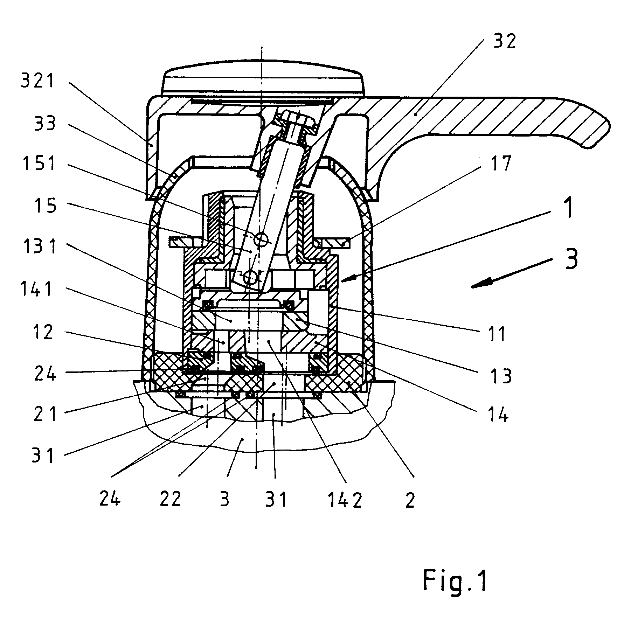

In Figur 1 der Zeichnung ist eine herkömmliche Sanitärarmatur 3 zum Teil gezeigt. Diese Sanitärarmatur wurde für eine in ihren Abmessungen wesentlich größere Mischventilkartusche 1 ausgebildet, wobei zur Ergänzung des Gehäuses der Sanitärarmatur 3 eine Abdeckhaube 33 im Bereich der Mischventilkartusche 1 vorgesehen ist. Die Haube 33 ist an dem vorkragenden Ende kugelförmig ausgebildet, wobei der Kugelmittelpunkt mit einer Schwenkachse 151 eines Stellhebels 15 der Mischventilkartusche 1 zusammenfällt. Der an der Sanitärarmatur 3 vorgesehene Betätigungsgriff 32 weist dabei ein etwa zylindrisches Haubenteil 321 auf, das mit dem kugelförmig geformten Teil der Abdeckhaube 33 zusammenwirkt und die Sanitärarmatur stirnseitig verschließt.
Die Mischventilkartusche 1 wird von einem Gehäuse, bestehend aus einer Mantelhülse 11 und einem Bodenteil 12 gebildet, wobei das Bodenteil 12 in die Mantelhülse 1 eingelassen ist. An dem Bodenteil 12 ist eine aus Hartstoff gebildete Ventilsitzscheibe 14 ortsfest angeordnet und weist zwei separate Einlaßöffnungen 141 für Kalt-und Warmwasser sowie eine Auslaßöffnung 142 für Mischwasser auf. An der Ventilsitzscheibe 14 ist eine Steuerscheibe 13 aus Hartstoff angelagert, in der ein Überströmkanal 131 ausgebildet ist, mit dem die in zwei Freiheitsgraden mit Hilfe des Stellhebels 15 bewegbare Steuerscheibe 13 wahlweise mit den Einlaßöffnungen 141 in Überdeckung gebracht werden kann.

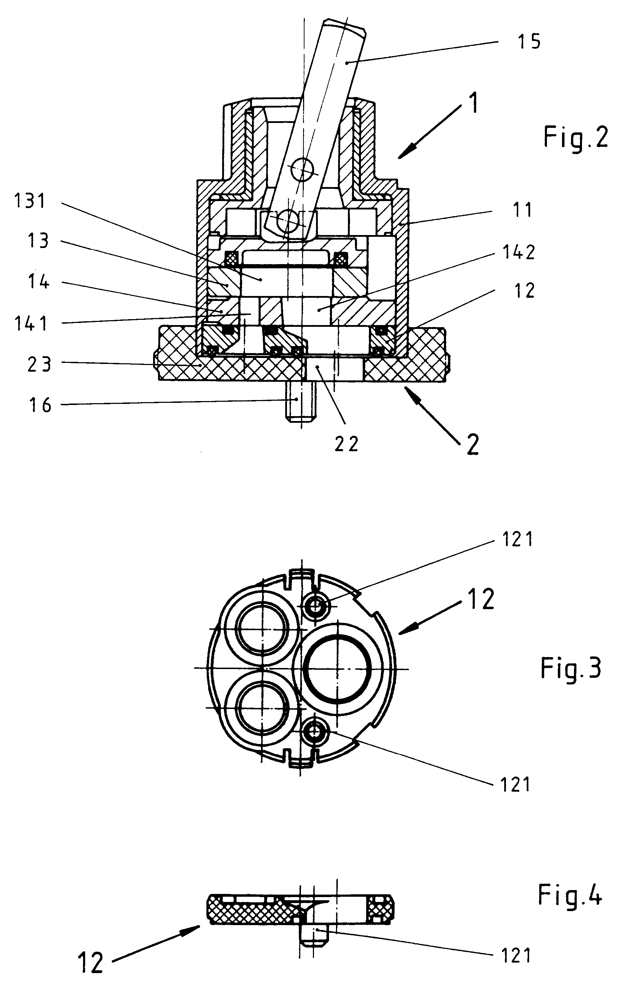

Die Mischventilkartusche ist mit Hilfe von in die Sanitärarmatur 3 einschraubbaren Befestigungsschrauben 16 und einer Metallringscheibe 17 in der Sanitärarmatur 3 befestigbar. Zur genauen Fixierung der in den Abmessungen verkleinerten Mischventilkartusche 1 ist die Mantelhülse 11 in eine napfförmige Scheibe 2 eingelagert, wobei die Aufnahmeöffnung so ausgebildet ist, daß der erforderliche radiale Abstand gewahrt wird und die Dicke des Bodens 23 so bemessen ist, daß die Schwenkachse 151 sich in der richtigen Position zur Sanitärarmatur 3 befindet. Die in dem Bodenteil 12 angeordneten Durchtrittsöffnungen zu den Einlaßöffnungen 141 und Auslaßöffnung 142 sind entsprechend in der napfförmigen Scheibe 2 durch den Boden 23 weitergeführt zu den in der Sanitärarmatur 3 ausgebildeten Zu- und Abflußkanälen 31. Zur Abdichtung und Trennung der einzelnen Verbindungsöffnungen 21,22 sind entsprechende Dichtringe 24 im Bodenteil 12 und im Gehäuse der Sanitärarmatur 2 angeordnet.
Zur Fixierung des Bodenteils 12 mit der napfförmigen Scheibe 2 sind am Bodenteil 12 Paßzapfen 121 (Figur 3 und 4) ausgebildet. Die Paßzapfen 121 greifen hierbei in der Stecklage in Bohrungen 25 der Scheibe 2 ein und sichern somit die Deckung der Verbindungsöffnungen 21, 22 mit den Öffnungen im Bodenteil 12. Zur Durchführung der Befestigungsschrauben 16 sind außerdem im Mantelbereich der napfförmigen Scheibe 2 Durchgangsbohrungen 28 ausgebildet.

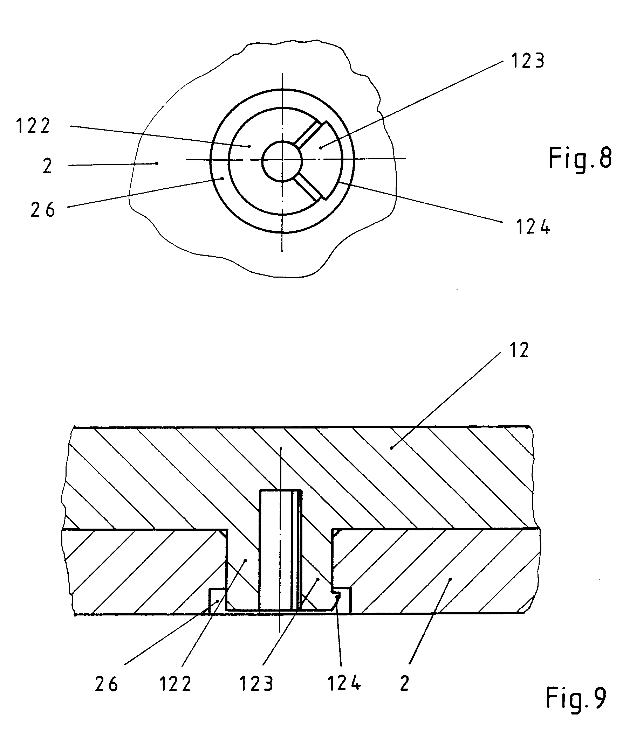

Zu den vorstehend beschriebenen Paßzapfen 121 ist in den Figuren 8 und 9 eine alternative Ausgestaltung gezeigt, wobei die Paßzapfen als Rohrstutzen 122 ausgebildet sind. Der vorstehende Wandungsbereich der Rohrstutzen 22 ist dabei als Schnappzunge 123 ausgebildet, so daß bei dem Zusammenfügen von Bodenteil 12 und Scheibe 2 die Schnappzungen 123 mit ihren Nasen 124 ausgelenkt werden und nach dem Erreichen der Stecklage zurückfedern und in jeweils einer Einsenkung 26 die beiden Teile miteinander verrasten.

## Patentansprüche

1. Mischventil für Sanitärarmaturen (3) mit wenigstens einer ortsfest angeordneten Ventilsitzscheibe (14), an der eine mit einem Stellgriff in zwei Freiheitsgraden bewegbare Steuerscheibe (13) angelagert ist und mit der Einlaböffnungen (141) in der Ventilsitzscheibe (14) für Warmwasser und Kaltwasser mit einer Auslaßöffnung (142) in Verbindung bringbar sind, wobei die einzelnen Ventilelemente in einem in Sanitärarmaturen einsetzbaren, aus einer Mantelhülse (11) und einem Bodenteil (12) bestehenden Gehäuse als Baueinheit in Form einer Mischventilkartusche (1) angeordnet sind und daß neben Befestigungsmittel zur dichten Halterung der Baueinheit in der Sanitärarmatur (3) ein an der Mischventilkartusche (1) aufsteckbares Paßteil vorgesehen ist, dadurch gekennzeichnet, daß das Paßteil als napfförmige Scheibe (2) ausgebildet ist, in der wenigstens Verbindungsöffnungen (21) zwischen den Warm- und Kaltwasserzuflußkanälen (31) der Sanitärarmatur (3) und der Ventilsitzscheibe (4) vorgesehen sind, und die Dicke des Bodens (23) der napfförmigen Scheibe (2) der Länge der Mischventilkartusche (1) angepaßt ist, wobei die napfförmige Scheibe (2) mittels Paßzapfen (121) zu dem Bodenteil (12) fixiert ist, so daß die Durchlaßöffnungen des Bodenteils (12) mit denen der Scheibe (2) in Verbindung stehen.

2. Mischventil nach Anspruch 1, dadurch gekennzeichnet, daß im Bereich der Verbindungsöffnungen (21) Dichtringe (24) zum dichten Anschluß der Mischventilkartusche (1) in der Sanitärarmatur (3) vorgesehen sind.

3. Mischventil nach Anspruch 1 oder 2, dadurch gekennzeichnet, daß an dem Bodenteil (12) zylindrische Paßzapfen (121) ausgebildet sind, die in Bohrungen (25) der Scheibe (2) in der Stecklage einfassen.

4. Mischventil nach Anspruch 3, dadurch gekennzeichnet, daß an den Paßzapfen (121) Schnappzungen ausgebildet sind, so daß die Scheibe (2) an dem Bodenteil (12) in der Stecklage verrastet ist.

5. Mischventil nach einem der Ansprüche 1 bis 4, dadurch gekennzeichnet, daß die Paßzapfen als Rohrstutzen (122) ausgebildet sind und im jeweils vorstehenden Wandungsbereich eine Schnappzunge (123) ausgebildet ist, wobei die Bohrungen (25) zur Aufnahme der Rohrstutzen (122) eine Einsenkung (26) für die vorstehenden Nasen (124) aufweisen.

## Claims

1. A mixing valve for plumbing fittings (3) having at least one fixedly arranged valve seat disc (14), on which is mounted a control disc (13) movable in two degrees of freedom by means of an adjusting lever and with which inlet openings (141) in the valve seat disc (14) for hot water and cold water are arranged to be brought into connection with an outlet opening (142), wherein the individual valve elements are arranged in a housing as a modular unit in the form of a mixing valve cartridge (1), the housing being insertable in plumbing fittings and comprising an outer sleeve (11) and a base part (12), and, in addition to fixing means for the sealed mounting of the modular unit in the plumbing fitting (3), an adapter that is arranged to be pushed onto the mixing valve cartridge (1) is provided, characterized in that the adapter is in the form of a cup-shaped disc (2) in which at least connecting openings (21) are provided between the hot and cold water supply channels (31) of the plumbing fitting (3) and the valve seat disc (4), and the thickness of the base (23) of the cup-shaped disc (2) is matched to the length of the mixing valve cartridge (1), the cup-shaped disc (2) being fixed to the base part (12) by means of locating pins (121) so that the admission openings of the base part (12) are connected with those of the disc (2).

2. A mixing valve according to claim 1, characterized in that in the region of the connecting openings (21) sealing rings (24) are provided for sealed connection of the mixing valve cartridge (1) in the plumbing fitting (3).

3. A mixing valve according to claim 1 or 2, characterized in that cylindrical locating pins (121) are formed on the base part (12) and in the connected state engage in bores (25) in the disc (2).

4. A mixing valve according to claim 3, characterized in that snap-action tongues are constructed on the locating pins (121) so that in the connected state the disc (2) is locked to the base part (12).

5. A mixing valve according to one of claims 1 to 4, characterized in that the locating pins are in the form of tubular connections (122) and a snap-action tongue (123) is formed in the respective projecting wall region, the bores (25) for receiving the tubular connections (122) having a recess (26) for the projecting members (124).

## Revendications

1. Mitigeur pour robinets d'eau sanitaire (3) avec un disque à siège de soupape (14) de soupape fixe, sur lequel est monté un disque de commande (13) que l'on peut déplacer avec une poignée suivant deux degrés de liberté et qui peut être mise en communication avec les orifices d'entrée (141) du disque à siège de soupape (14) pour l'eau chaude et l'eau froide et un orifice de sortie (142), les différents éléments de soupape pouvant se loger dans des robinets d'eau, l'ensemble comprenant un boîtier formé d'un manchon (11) et d'un fond (12) constituant un ensemble en forme de cartouche de mitigeur (1), à côté des moyens de fixation pour maintenir de façon étanche l'ensemble dans le robinet (3), il est prévu une pièce enfichable qui peut coiffer la cartouche de mitigeur (1), cartouche caractérisée en ce que la pièce enfichable est en forme de disque à bord relevé (2), comportant au moins les orifices de liaison (21) entre les canaux d'arrivée d'eau chaude et d'eau froide (31) du robinet (3) et le disque formant siège de soupape (4), l'épaisseur du fond (23) du disque (2) à bord relevé étant adaptée à la longueur de la cartouche de mitigeur (1), le disque à bord relevé (2) étant fixé au fond (12) par des tenons d'enfichage (121) pour des orifices traversants du fond (12) communiquant avec ceux du disque (2).

2. Mitigeur selon la revendication 1, caractérisé en ce qu'au niveau des orifices de liaison (21), il y a des rondelles d'étanchéité (24) pour assurer la fermeture étanche de la cartouche (1) du mitigeur (2) dans le robinet (3).

3. Mitigeur selon la revendication 1 ou 2, caractérisé par des tenons d'enfichage (121) cylindriques réalisés sur le fond (12) et qui viennent prendre dans des perçages (25) du disque (2) en position engagée.

4. Mitigeur selon la revendication 3, caractérisé par des languettes d'enclipsage réalisées sur les tenons d'enfichage (121) pour accrocher le disque (2) en position d'engagement sur le fond (12).

5. Mitigeur selon l'une des revendications 1 à 4, caractérisé en ce que les tenons d'enfichage sont en forme de manchons tubulaires (122) et comportent chaque fois dans la partie de paroi en saillie, une languette d'enclipsage (123), les perçages (25) pour recevoir les manchons tubulaires (122) comportant une partie en retrait (26) pour les becs (124) en saillie.
